# DEMANDE DE BREVET EUROPEEN

(11) **EP 0 671 856 A1**
(43) Date de publication de la demande: **13.09.1995**
(21) Numéro de dépôt: 95400222.6
(22) Date de dépôt: 02.02.1995
(51) Int. Cl.: H04Q 1/14

(54) **Dispositif de brassage de cables multibrins, notamment pour applications telephoniques**

(30) Priorité: 14.02.1994 FR 9401624
(71) Demandeur: FRAMATOME CONNECTORS INTERNATIONAL, 92400 Courbevoie, Paris (FR)
(72) Inventeur: Prin, Stéphane, F-25300 Pontarlier (FR); Petite, Alain, F-25300 Pontarlier (FR); Defrasne, André, F-25300 Pontarlier (FR)
(74) Mandataire: Lepercque, Jean

(57) **Abrégé**

L'invention concerne un dispositif de brassage de câbles pour relier N câbles d'arrivée (53) à N câbles de sortie (58) selon un schéma d'interconnexion prédéterminé. Il comporte un boîtier (10) dans lequel est monté au moins un module (20) présentant un circuit imprimé (100) sur lequel sont disposés une embase (55) de connecteur d'(entrée pour recevoir un connecteur d'extrémité de câble d'entrée et une embase (57) de connecteur de sortie pour recevoir un connecteur d'extrémité de câble de sortie,

Le circuit imprimé (100) présente des pistes conductrices (102) réalisant un couplage des contacts (21) de l'embase de connecteur d'entrée (55) et des contacts (21) de l'embase de connecteur de sortie (57), ledit couplage correspondant à au moins une partie dudit schéma d'interconnexion.

## Description

La présente invention a pour objet un dispositif de brassage de câbles pour relier N câbles d'arrivée à N câbles de sortie selon un schéma d'interconnexion prédéterminé.

Dans les applications téléphoniques, notamment pour relier un certain nombre de lignes téléphoniques en provenance d'un central téléphonique vers un nombre égal d'abonnés, on utilise généralement des installations pourvues de dispositifs de brassage permettant de réaliser cette fonction, par mise en oeuvre de réglettes de brassage brin-à-brin présentant des contacts auto-dénudants.

Avec cette technique existante, la modification du schéma de brassage impose le démontage des contacts auto-dénudants des câbles d'arrivée et/ou des câbles de sortie pour la réalisation d'un nouveau câblage.

La présente invention a pour objet un dispositif de brassage permettant de relier facilement l'un des câbles d'entrée à l'un quelconque des câbles de sortie et qui ne présente par l'inconvénient précité.

L'invention concerne ainsi un dispositif de brassage de câbles pour relier N câbles d'arrivée à N câbles de sortie selon un schéma d'interconnexion prédéterminé caractérisé en ce qu'il comporte un boîtier dans lequel est monté au moins un module présentant un circuit imprimé sur lequel sont disposés une embase de connecteur d'entrée pour recevoir un connecteur d'extrémité de câble d'entrée et une embase de connecteur de sortie pour recevoir un connecteur d'extrémité de câble de sortie, le circuit imprimé présentant des pistes conductrices réalisant un couplage des contacts de l'embase du connecteur d'entrée et des contacts de l'embase de connecteur de sortie, ledit couplage correspondant à au moins une partie dudit schéma d'interconnexion.

Un avantage potentiel de ce dispositif est de fournir dans le cas des lignes d'abonnés multifilaires le même encombrement que les têtes de brassage de l'art antérieur pour lignes bifilaires.

Sur cette configuration, les fonctions de brassage sont réalisées par le circuit imprimé et pour modifier le brassage, il suffit de permuter les fiches des connecteurs d'entrée ou des connecteurs de sortie correspondant au nouveau brassage désiré. Ceci permet une permutation des huit fils de la ligne abonné en une seule opération.

Le module comporte avantageusement une embase de prise de test pour recevoir un connecteur de test des N câbles d'arrivée et/ou des N câbles de sortie. Cette fonction est facilement réalisée par l'adjonction de pistes conductrices supplémentaires sur le circuit imprimé et qui permettent de se prendre en dérivation sur les paires téléphoniques.

Le module peut également comporter une embase d'interconnexion dans laquelle est disposée un connecteur d'interconnexion amovible de manière à permettre une coupure au moins partielle de ladite interconnexion sans débranchement d'aucun connecteur d'extrémité. Ce connecteur d'interconnexion disposé en série entre les câbles d'arrivée et les câbles de sortie permet une déconnexion temporaire d'au moins certains des abonnés sans inconvénient particulier et sans toucher ni aux connecteurs d'entrée et ni aux connecteurs de sortie. En outre, comme dans les installations de brassage les connecteurs d'arrivée sont disposés au-dessus du boîtier et les connecteurs de sortie sont disposés en dessous du boîtier, il est facile en disposant l'embase d'interconnexion sur une face adjacente du circuit imprimé d'avoir accès à celles-ci par une face avant du boîtier avec une insertion et une extraction dans une direction horizontale.

L'embase de connecteur d'entrée et l'embase de connecteur de sortie des modules sont montées avantageusement par une face d'appui sur une première face de circuit imprimé, sur un premier et un deuxième bords opposés du circuit imprimé.

Une dite embase de prise de test et/ou une dite embase d'interconnexion sont avantageusement montées par une face d'appui sur ladite première face de circuit imprimé, sur un troisième bord du circuit imprimé adjacent auxdits premier et deuxième bords.

Selon un mode de réalisation préféré, le boîtier comporte plusieurs modules, et, pour chaque module, une paire de chemins de guidage disposés sur des faces internes opposées du boîtier ainsi qu'au moins un moyen de verrouillage du module dans le chemin de guidage.

Chaque chemin de guidage peut présenter deux bords de guidage coopérant, pour effectuer ledit guidage, avec d'une part une face de guidage d'une embase de connecteur opposée à ladite face d'appui et d'autre part une deuxième face du circuit imprimé opposée à ladite première face.

Un dit moyen de verrouillage est avantageusement une rampe inclinée par rapport à la direction de guidage dudit chemin de guidage, ladite rampe comportant, à une extrémité aval par rapport à un sens d'insertion F du module dans le chemin de guidage, une face d'arrêt sensiblement perpendiculaire à ladite direction de guidage.

Le boîtier peut comporter des ouvertures situées en face d'au moins certaines desdites embases lorsque les modules sont montés dans le boîtier.

L'invention concerne également un module de brassage de câbles pour relier N câbles d'entrée à N câbles de sortie selon un schéma d'interconnexion prédéterminé caractérisé en ce qu'il comporte un circuit imprimé sur lequel sont disposés une embase de connecteur d'entrée pour recevoir un connecteur d'extrémité de câble d'entrée et une embase de connecteur de sortie pour recevoir un connecteur d'extrémité de câble de sortie, le circuit imprimé réalisant un couplage des contacts de l'embase de connecteur d'entrée et des contacts de l'embase de connecteur de sortie, ledit couplage correspondant à au moins une partie dudit schéma d'interconnexion.

D'autres caractéristiques et avantages de l'invention apparaîtront mieux à la lecture de la description qui va suivre, donnée à titre d'exemple non limitatif, en liaison avec les dessins qui représentent :
- la figure 1 une vue en perspective du dispositif selon l'invention comprenant un boîtier dans lequel a été monté un module ;
- la figure 2 une vue de trois quart avant d'un boîtier selon l'invention invention;
- la figure 3 une vue en trois quart avant d'un boîtier selon l'invention monté sur un rail de guidage et avec mise en place de trois modules ;
- les figures 4a et 4b respectivement en vue de dessous et en coupe longitudinale AA d'un boîtier selon l'invention ;
- les figures 5a et 5b respectivement en vue latérale et en vue de dessus d'un dispositif selon l'invention dans lequel ont été montés trois modules ;
- la figure 6 une vue de dessus d'un module selon l'invention.

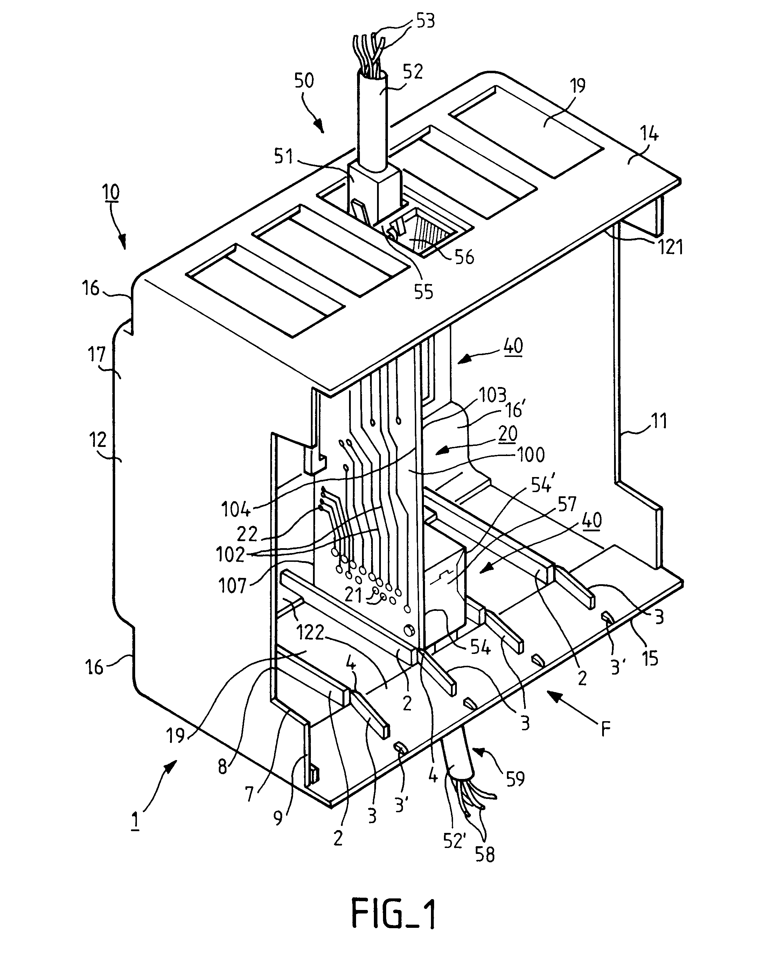

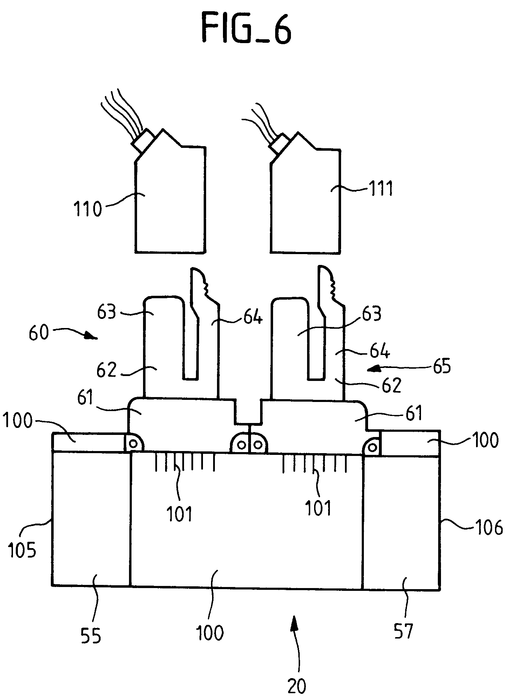

En se reportant plus particulièrement à la figure 1, un boîtier désigné par le repère général 10 comporte un certain nombre de logements, ici au nombre de cinq permettant de recevoir des modules désignés par le repère général 20 et dont un est représenté en position après son insertion dans le sens de la flèche F et coulissement entre les paires de rails de guidage 2 disposés sur des faces internes opposées 121 et 122 du boîtier 10. Un module 20 comporte un circuit imprimé 100 et une embase 55 de connecteur d'entrée permettant de recevoir un ou plusieurs connecteurs d'entrée 50 (ici au nombre de deux) comportant chacun un câble 52 présentant un nombre donné de câbles élémentaires d'entrée 53. Sur ce circuit imprimé est également disposée une embase 57 de connecteur de sortie pour recevoir un ou plusieurs connecteurs de sortie (ici au nombre de deux) sur lesquels sont montés des câbles 52' présentant un nombre donné de câbles élémentaires de sortie 58. Comme représenté, les embases d'arrivée 55 et de sortie 57 sont montées sur une face 103 du circuit imprimé 100 et jouxtent des bords opposés 105 et 106 (voir la figure 6) du circuit imprimé 100. Le coulissement entre les rails de guidage 2 s'effectue entre d'une part la face 104 opposée à la face 103 du circuit imprimé et la face supérieure 54' des embases 55 et 57. Les ouvertures 19 situées en face des embases 55 et 57 permettent le passage des connecteurs d'extrémité 50 et 59.

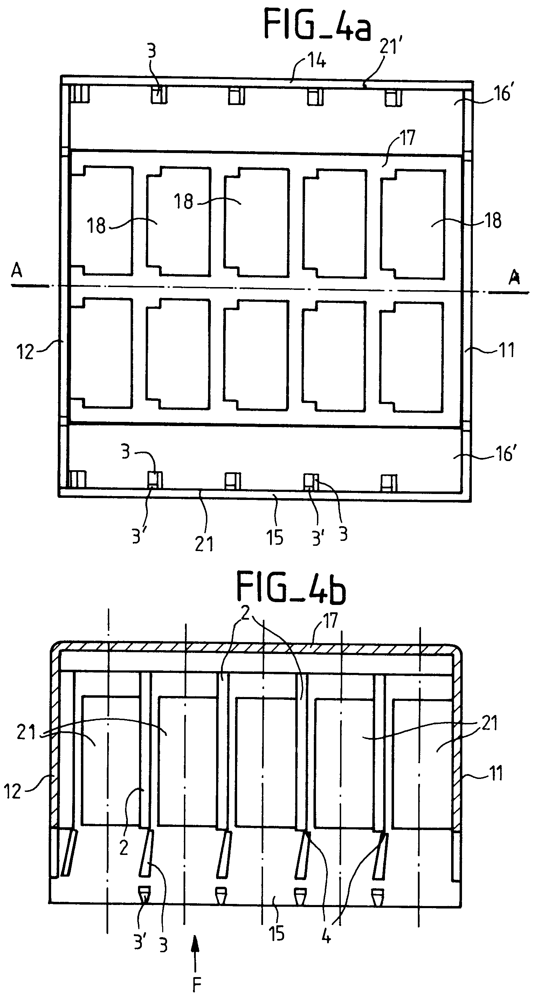

Comme représenté plus particulièrement aux figures 1, 4a et 4b, le boîtier 10 comporte donc des faces latérales opposées 14 et 15 dans lesquelles sont ménagées les ouvertures 19, une face supérieure 16 présentant une région centrale surélevée 17 dans laquelle sont ménagées des ouvertures 18 permettant une connexion à des embases de prise de test 60 ou des embases d'interconnexion 65.

En effet, chaque module 20 peut être pourvu d'une embase 60 de prise de test, par exemple comportant deux rangées de contacts, les contacts d'une première rangée étant reliés point à point par les pistes du circuit imprimé à l'embase de connecteur d'entrée et les contacts de la deuxième rangée sont reliés point à point par les pistes du circuit imprimé à l'embase 57 de connecteur de sortie.

Ceci permet donc de tester les paires téléphoniques d'un abonné ou de plusieurs abonnés à l'aide d'une fiche de test 110 sans avoir à effectuer de démontage du dispositif de brassage.

Chaque module 20 peut être pourvu d'une embase 65 d'interconnexion, coopérant avec une fiche d'interconnexion 111 par exemple munie de ponts reliant les deux rangées de contacts pour établir la connexion entre les câbles d'entrée et de sortie. On peut substituer à la fiche d'interconnexion une fiche de test reliée point par point aux brins d'un câble et conduisant aux appareils de test pour tester les câbles en position non interconnectée.

On peut donc réaliser des tests ou des interconnexions à volonté.

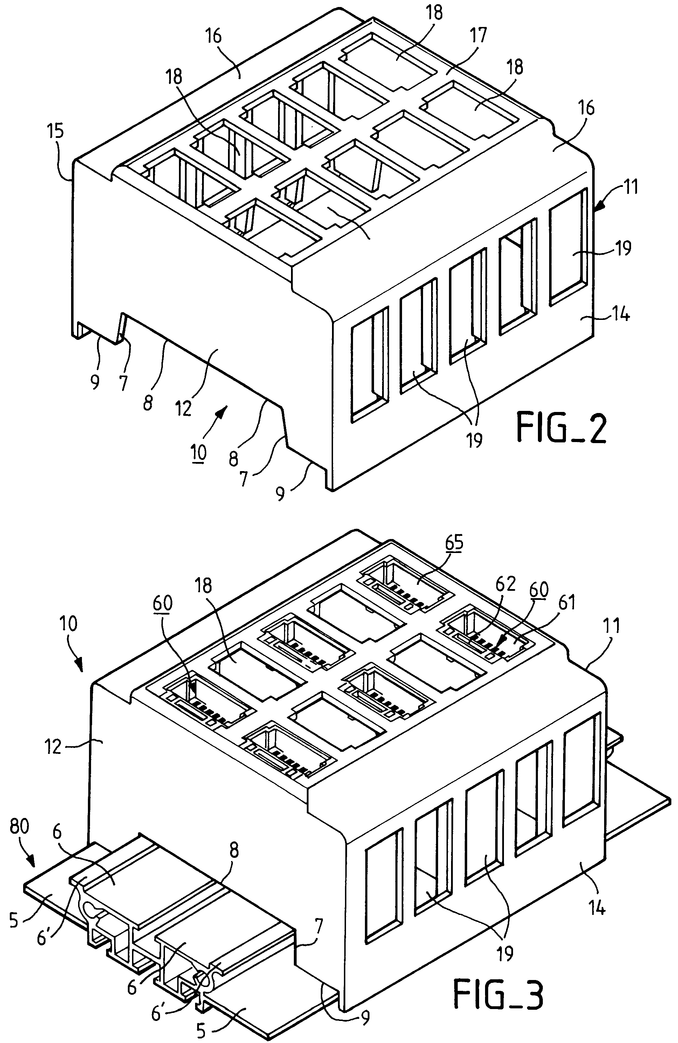

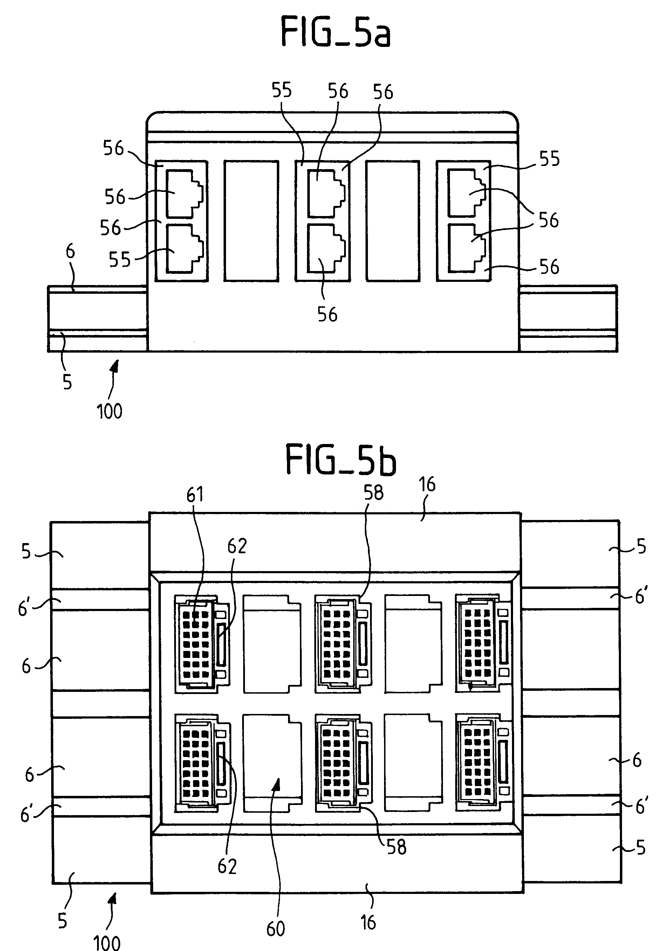

Comme le montrent plus particulièrement les figures 3, 5a et 5b, le boîtier 10 présente sur ses faces longitudinales 11 et 12 des ouvertures permettant de recevoir un rail 80 réalisé sous forme d'un profilé présentant des ailes inférieures 5 et une région centrale surélevée 6 présentant des ailes latérales 6' qui viennent porter sur le bord supérieur central 8 de l'ouverture alors que les ailes 5 portent sur les bords supérieurs latéraux 9.

On remarquera que le montage est réalisé dans la position du boîtier 10 de la figure 1 c'est-à-dire que les câbles d'entrée 53 arrivent par le haut et les câbles de sortie 58 sont disposés en dessous de la face inférieure 15 du boîtier 10. L'avant 16 du boîtier 10 permet un accès aux embases de test d'interconnexion 65 par insertion et extraction dans une direction horizontale.

Comme le montre particulièrement la figure 6, il est prévu pour chaque circuit imprimé 100 d'un module 20, deux embases l'une 60 servant de prise de test et l'autre 65 d'interconnexion (et éventuellement de test comme indiqué ci-dessus) de manière à pouvoir réaliser les fonctions précitées.

Le montage d'un module dans le boîtier s'effectue alors de la manière suivante : on présente celui-ci dans le sens de la flèche F de manière à faire coulisser les modules dans le chemin de guidage des faces 54' et 104. Le jeu est suffisant pour permettre une présentation dans une direction située légèrement de biais par rapport à la flèche F jusqu'au verrouillage par la face aval 4 qui se fait avec un léger forçage lors de l'introduction du module. Comme le montre la figure 4a, une fonction de verrouillage est prévue à chaque extrémité longitudinale du circuit imprimé 100. Après sa mise en place, le circuit imprimé est en butée sur les faces internes 16' (figure 4a) et s'auto-maintient par cette fonction de verrouillage. On remarquera que ces fonctions sont obtenues avec un boîtier 10 qui est facilement réalisable en une seule pièce par moulage.

Comme le montre plus particulièrement la figure 6, les embases 60 et 65 présentent, de manière connue en soi, des bras 63 et 64 d'accrochage d'une fiche, référencée 110 pour l'embase 60 et 111 pour l'embase 65.

## Revendications

**1 -** Dispositif de brassage de câbles pour relier N câbles d'entrée (53) à N câbles de sortie (58) selon un schéma d'interconnexion prédéterminé, comportant un boîtier (10) dans lequel est monté au moins un module (20) présentant un circuit imprimé (100) sur lequel sont disposés une embase (55) de connecteur d'entrée pour recevoir un connecteur (50) d'extrémité de câble d'entrée et une embase (57) de connecteur de sortie pour recevoir un connecteur (59) d'extrémité de câble de sortie, le circuit imprimé (100) présentant des pistes conductrices (102) réalisant un couplage des contacts (21) de l'embase de connecteur d'entrée (55) et des contacts (21) de l'embase de connecteur de sortie (57), ledit couplage correspondant à au moins une partie dudit schéma d'interconnexion, caractérisé en ce que l'embase (55) de connecteur d'entrée et l'embase (57) de connecteur de sortie des modules (20) sont montées par une face d'appui (54) sur une première face (103) du circuit imprimé, sur un premier (105) et un deuxième (106) bords opposés du circuit imprimé (100), et en ce que le boîtier (10) comporte des ouvertures (18, 19) situées en face d'au moins certaines desdites embases lorsque les modules (20) sont montés dans le boîtier (10).

**2 -** Dispositif selon la revendication 1, caractérisé en ce que le module (20) comporte une embase (60) de prise de test pour recevoir un connecteur de test des N câbles d'arrivée (53) et/ou des N câbles de sortie (58).

**3 -** Dispositif selon une des revendications 1 ou 2 caractérisé en ce que le module (20) comporte une embase d'interconnexion (65) dans laquelle est disposé un connecteur d'interconnexion amovible de manière à permettre une coupure au moins partielle de ladite interconnexion sans débranchement d'aucun connecteur d'extrémité.

**4 -** Dispositif selon la revendication 1 caractérisé en ce qu'au moins une dite embase de prise de test (60) et/ou une dite embase d'interconnexion (65) comporte une face d'appui (58) en appui sur ladite première face (103) de circuit imprimé, sur un troisième bord (107) du circuit imprimé adjacent auxdits premier (105) et deuxième bords (106).

**5 -** Dispositif selon une des revendications précédentes, caractérisé en ce que le boîtier (10) comporte plusieurs modules (20) et pour chaque module (20) une paire de chemins de guidage (2) disposés sur des faces internes opposées (121, 122) du boîtier (10) ainsi qu'au moins un moyen de verrouillage (3, 4) du module (20) dans le chemin de guidage (2).

**6 -** Dispositif selon la revendication 5, caractérisé en ce que chaque chemin de guidage présente deux bords de guidage (2) coopérant pour effectuer ledit guidage avec d'une part une face de guidage (54') d'une embase de connecteur (55, 57) opposée à ladite face d'appui (54) et d'autre part une deuxième face (104) de circuit imprimé (100) opposée à ladite première face (103).

**7 -** Dispositif selon une des revendications 5 ou 6, caractérisé en qu'un dit moyen de verrouillage comporte une rampe inclinée (3) par rapport à une direction de guidage dudit chemin de guidage, ladite rampe (3) comportant à une extrémité aval par rapport à un sens d'insertion (F) du module (20) dans le chemin de guidage (3), une face d'arrêt (4) sensiblement perpendiculaire à ladite direction de guidage.

**8 -** Module de brassage de câbles pour relier N câbles d'entrée (53) à N câbles de sortie (58) selon un schéma d'interconnexion prédéterminé, caractérisé en ce qu'il comporte un dispositif selon l'une quelconque des revendications 1 à 7.
